# EUROPÄISCHE PATENTSCHRIFT

(11) **EP 3 575 909 B1**
(45) Veröffentlichungstag und Bekanntmachung des Hinweises auf die Patenterteilung: **27.09.2023**
(21) Anmeldenummer: 18175554.7
(22) Anmeldetag: 01.06.2018
(51) Int. Cl.: G05B 23/02, F15B 19/00, F16K 31/122, F16K 37/00

(54) **VERFAHREN ZUR ÜBERWACHUNG EINER MEHRZAHL VON MECHANISCHEN SYSTEMEN**
METHOD FOR MONITORING A PLURALITY OF MECHANICAL SYSTEMS
PROCÉDÉ DE SURVEILLANCE D'UNE PLURALITÉ DE SYSTÈMES MÉCANIQUES

(43) Veröffentlichungstag der Anmeldung: 04.12.2019
(73) Patentinhaber: Siemens Aktiengesellschaft, 80333 München (DE)
(72) Erfinder: Barth, Johannes, 76228 Karlsruhe (DE); Huck, Ralf, 63538 Großkrotzenburg (DE)
(74) Vertreter: Siemens Patent Attorneys

(56) Entgegenhaltungen:
- DE-A1-102007 034 059
- DE-A1-102008 062 290
- US-A1- 2016 245 279

## Beschreibung

Die Erfindung betrifft ein Verfahren zur Überwachung einer Mehrzahl von Systemen mit mechanisch beweglichen Teilen nach Anspruch 1.

Ventile werden in der Prozessindustrie zum Beispiel mit Hilfe pneumatischer Antriebe und pneumatischer Hilfsenergie geöffnet. Dabei sorgen Federpakete im Antrieb dafür, dass das Ventil bei einem Ausfall der pneumatischen Hilfsenergie geschlossen wird. Bricht jedoch einer der Federn, kann das Ventil im Fehlerfall nicht mehr sicher geschlossen werden. Die Bereiche vor und hinter dem Ventil können so nicht mehr zuverlässig voneinander getrennt werden, was ernste Konsequenzen mit sich führen kann.

Da Ventile überwiegend zum temporären Absperren/Öffnen eingesetzt werden, befinden sie sich über verhältnismäßig lange Zeiträume hinweg in einem geöffneten / geschlossenen Zustand, um dann nur bei Bedarf mittels eines Antriebs und pneumatischer Hilfsenergie geschlossen/geöffnet zu werden. Durch das lange Verbleiben von Ventil und Antrieb in ihrer Endlage neigt die Kombination aus Ventil und Antrieb regelmäßig dazu, in einer Endlage festzusitzen.

Während des Schließens müssen Ventil und Antrieb beispielsweise aus einer Startlage durch Überwindung eines Losbrechmoments gelöst werden, bevor es durch weitere Druckabsenkung und mittels der Federkraft der Federpakete in eine Geschlossenposition geführt wird. Im Verlauf eines Lebenszyklus des Ventils steigt das Losbrechmoment, bedingt durch Verschleiß und Korrosion des Antriebs, an.

Ist das Losbrechmoment größer als die Federkraft des Federpakets, so kann das Ventil trotz Druckabsenkung nicht mehr geschlossen werden. Der Absperrvorgang kann dabei nicht mehr sicher ausgeführt werden, wodurch große Schäden entstehen können. Während des Öffnens treten sinngemäß die gleichen Phänomene auf, wobei das Losbrechmoment insbesondere bei metallisch dichtenden Ventilen, bedeutend größer sein kann, so dass der maximale Druck der pneumatischen Hilfsenergie bei gegebener Membranfläche im Antrieb nicht mehr ausreicht das Ventil zu öffnen, was ebenfalls zu erheblichen Schäden führen kann.

Ein weiteres Schadensbild ergibt sich durch eine Leckage in dem Körper des Ventils. Hierdurch können gegebenenfalls chemisch aggressive bzw. hochreaktive Medien austreten, die Schäden verursachen können.

Zudem kann der Slip Stick Effekt (ein Ruckeln) bei einem Ventil auftreten. Dieser Effekt stellt den Beginn einer einsetzenden Unbeweglichkeit des Antriebs dar.

Die pneumatische Hilfsenergie wird in der Regel über an dem Antrieb montierte Magnetventile geschaltet. Die Magnetventile wiederum werden typischerweise mittels 24V-Digitalausgängen zentraler Steuerungen oder Prozessleitsystem geschaltet. Abgesehen von gegebenenfalls vorhandenen mechanischen Endlagenmeldern sind im klassischen Aufbau bisher keine Diagnosevorrichtungen an schaltenden Ventilen vorhanden.

Die zuvor erläuterten Schadensbilder bei in der Prozessindustrie typischerweise verwendeten Ventilen können daher nicht oder nur mit verhältnismäßig hohem Aufwand detektiert werden. Ein sicherer Betrieb von Ventilen, insbesondere On-Off-Ventilen, ist daher bislang nur mittels regelmäßiger Überprüfung und Wartung oder mittels redundanter Installationen (ein oder mehrere redundante Ventile) oder mittels Überdimensionierung einzelner Elemente der Ventile, beispielsweise durch Verwendung kräftigerer Federn, oder mittels zusätzlicher und daher unwirtschaftlicher Diagnosevorrichtungen aus dem Bereich der regelnden Ventile möglich gewesen (z.B. sogenannte Stellungsregler, die die Anschaffungskosten eines schaltenden Ventils um ein Vielfaches übersteigen können).

In Ermangelung geeigneter, preiswerter Diagnoseinstrumente werden die Ventile beispielsweise alle fünf Jahre zu Wartungszwecken demontiert, was vergleichsweise hohe Servicekosten und Anlagenstillstände verursacht. Zudem stellt sich oft heraus, dass ein deutlich längeres Wartungsintervall ausreichend gewesen wäre.

Um die Ventile gängig zu halten und einem Anstieg des Losbrechmoments entgegenzuwirken, können diese regelmäßig kurz partiell oder vollständig geöffnet/geschlossen werden (partial stroke oder full stroke Test). Um dies automatisiert durchzuführen, können die oben erwähnten Stellungsregler eingesetzt werden. Deren Einsatz erfordert eine im Vergleich zu Magnetventilen deutliche komplexere Stellungsreglung sowie eine aufwändigere Ansteuerungstechnik. Auch sind im Falle einer Nachrüstung hohe Umbauaufwendungen vonnöten. Dies führt dazu, dass diese Technik praktisch keine Verwendung findet.

Ein Beispiel für eine solche Überwachung ist aus der DE 10 2015 118 198 A1 bekannt. Hierin ist eine Überwachungseinheit für ein Stellgerät offenbart, die ein Stellventil, einen das Stellventil betätigenden pneumatischen Antrieb und einen den Stellantrieb ansteuernden Stellungsregler umfasst.

Aus der WO 99/21066 A1 ist ein Stellungsregler für ein Stellgerät eines Ventils bekannt, der eine Diagnoseeinheit aufweist.

Des Weiteren offenbart die DE 10 2005 024 686 A1 ein Stellgerät zum Betätigen eines Ventils mit einem pneumatischen Antrieb und einer Diagnosefunktion.

In der DE 10 2008 062 290 A1 sind ein Verfahren und eine Ventilanordnung zur Steuerung eines Prozessmediumflusses durch eine Rohrleitung offenbart.

Die DE 10 2007 034 059 A1 zeigt eine Stelleinrichtung für ein Auf/Zu-Ventil mit einem pneumatischen Antrieb, der über ein Magnetventil an einer Druckluftversorgung angeschlossen ist.

In der US 2016/0245279 A1 ist eine Architektur für eine vorhersagende und vorwarnende Wartung von Vakuumpumpen auf Basis eines Maschinenlernens offenbart.

Zudem ist die Möglichkeit bekannt, zusätzliche Sensorik/Aktorik einzusetzen, die mittels Feldbussen miteinander und mit dem Leitsystem einer technischen Anlage, insbesondere Prozessanlage verbunden ist. Dies erfordert jedoch einen hohen Aufwand an zusätzlichem Material, das für die eigentliche Prozessautomatisierung nicht benötigt werden würde. Zusätzliche, lokale Informationen über einen Zustand der Ventile sind daher nur mit einem hohen Mehraufwand zu erhalten.

Es ist zudem bekannt, einen Druckverlauf in einem Ventil oder bei einem Öffnungs- oder Schließvorgang des Ventils entstehende, durch Körperschall oder Luftschall übertragene Geräusche mittels einer speziellen Diagnosevorrichtung zu erfassen, um sicherheitsrelevante Daten des Ventils zu erhalten. Diese Daten können jedoch nur unzureichend für eine Charakterisierung eines Zustands des Ventils verwendet werden.

Der Erfindung liegt die Aufgabe zugrunde, ein Verfahren zur Überwachung einer Mehrzahl von Systemen mit mechanisch beweglichen Teilen anzugeben, das mit vergleichsweise geringem Material- und Kostenaufwand durchgeführt werden kann und eine weitreichende Erfassung eines technischen Zustands der Systeme ermöglicht.

Diese Aufgabe wird gelöst durch ein Verfahren zur Überwachung einer Mehrzahl von Systemen mit mechanisch beweglichen Teilen, welche Systeme vorzugsweise Teil einer technischen Anlage, insbesondere Produktionsanlage, sind, wobei die Systeme jeweils wenigstens ein mechanisch bewegliches Teil aufweisen, nach Anspruch 1. Vorteilhafte Weiterbildungen ergeben sich aus den abhängigen Ansprüchen.

Bei einem Verfahren der eingangs beschriebenen Art wird die Aufgabe erfindungsgemäß dadurch gelöst, dass Indikatoren erfasst werden, die zu einer technischen Charakterisierung eines Bewegungsvorgangs des jeweiligen mechanisch beweglichen Teils verwendbar sind. Die Erfassung der Indikatoren erfolgt dabei mittels zur Erfassung der Indikatoren ausgebildeter und vorgesehener technischer Mittel. Die erfassten Indikatoren werden anschließend an eine außerhalb der Systeme angeordnete Auswerteeinheit übertragen. Zudem wird ein Wartungszustand des jeweiligen mechanisch beweglichen Teils an die außerhalb der Systeme angeordnete Auswerteeinheit übertragen. Zudem findet eine Kategorisierung der der Auswerteeinheit zugeordneten Systeme durch die Auswerteeinheit statt. Außerdem werden die erfassten und in der Auswerteeinheit hinterlegten Indikatoren mit den erfassten Wartungszuständen verglichen, um aus einer Änderung des Wartungszustands zugehörige Grenzwerte für die Indikatoren oder eine Kombination von Indikatoren für die jeweilige Kategorie des Systems zu bestimmen und in der Auswerteeinheit zu hinterlegen. Zudem findet ein kontinuierliches Anpassen der Grenzwerte für die Indikatoren oder eine Kombination von Indikatoren für jede Kategorie eines Systems durch die Auswerteeinheit statt, um eine Trennschärfe der berechneten Grenzwerte automatisch zu verbessern. Außerdem werden die erfassten Indikatoren mit den in der Auswerteeinheit hinterlegten Grenzwerten verglichen, um einen technischen Zustand des Systems zu bestimmen.

Das System ist bevorzugt Teil einer technischen Anlage, insbesondere einer Prozessanlage. Dabei kann es sich insbesondere um Anlagen aus der Prozessindustrie wie beispielsweise eine chemische, pharmazeutische, petrochemische oder eine Anlage aus der Nahrungs- und Genussmittelindustrie handeln. Hiermit umfasst sind aber auch jegliche Anlagen aus der Produktionsindustrie, wie Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Die Auswerteeinheit kann in einer externen Cloudumgebung außerhalb der technischen Anlage angeordnet sein bzw. Teil einer solchen Cloudumgebung sein. Unter einer Cloudumgebung wird dabei ein Netzwerk aus Servern verstanden, die verteilt angeordnet, aber miteinander verbunden sind. Die Server sind dabei dafür ausgelegt, Daten zu speichern und zu verwalten, Anwendungen auszuführen sowie verschiedene Inhalte und Dienste online bereitzustellen. Die in der Cloudumgebung gespeicherten Indikator-Daten sind online zugänglich, sodass auch die technische Anlage selbst über das Internet Zugriff auf ein zentrales Datenarchiv in der Cloudumgebung hat. Die Cloudumgebung kann auch auf der Anlage als sogenannte "on premise private Cloud" ausgeführt werden, wenn ein Zugang zum Internet aus Sicherheitsgründen vermieden werden soll.

Ein technischer Zustand kann beispielsweise der Zustand "nicht funktionsfähig" oder "eingeschränkt funktionsfähig" oder "voll funktionsfähig" sein. Weiterhin kann der technische Zustand eine Leistungsfähigkeit des Systems, insbesondere eines Ventilsystems, umfassen und beispielsweise Informationen darüber enthalten, mit welcher Geschwindigkeit sich das mechanisch bewegliche Teil bewegt (z.B. schließt oder öffnet), oder welche Latenzzeiten auftreten.

Grundsätzlich lässt sich das Verfahren bei allen Anwendungen anwenden, bei denen es durch Verschleiß einzelner Teile zu einem erhöhten Servicebedarf oder ungeplanten Stillständen kommt. Beispiele solcher Anwendungen sind Motoren, Getriebe, Pumpen, Förderbänder und dergleichen. Bevorzugt handelt es sich bei den Systemen mit mechanisch beweglichen Teilen um Ventilsysteme. Diese umfassen jeweils wenigstens ein Ventil, das zur Durchführung eines Öffnungs- und eines Schließvorgangs ausgebildet ist.

Die zur Erfassung der Indikatoren verwendeten technischen Mittel können aufgrund der Auswertung der Daten außerhalb der Systeme auf einfache Art und Weise bei minimalem Hardwareaufwand realisiert werden. Die Auswerteeinheit kann vorteilhafterweise mehrere Systeme überwachen und dabei die Systeme beispielsweis nach Ventiltyp, Prozessbedingungen und Standort in einer technischen Anlage kategorisieren. Dadurch lassen sich einzelne Ventiltypen, die unter Umständen häufig Ausfallzeiten aufweisen, einfach erkennen und es können entsprechende Maßnahmen eingeleitet werden. Durch die Kategorisierung der von der Auswerteeinheit überwachten Ventilsysteme lassen sich somit systematische Fehler in den Ventilsystemen, die bei einem bestimmten Ventilsystemtyp regelmäßig auftreten, einfacher erkennen und korrigieren.

Durch den Vergleich der Historie der Indikatoren mit den Kategorien und den Wartungszuständen lässt sich bei Vorliegen einer signifikanten Zahl von je Kategorie rückgemeldeten Wartungszuständen auf überraschend einfache Weise erkennen, welcher Indikatortrend oder Kombination von Indikatortrends zu einem Defekt führen wird (selbstlernendes System).

Mittels dieser Informationen kann die Auswerteeinheit dann einen möglichen Wartungsbedarf automatisch vorhersehen und den Betreiber warnen, bevor dieser eine geplante Wartung durchführt. Auf diese Weise werden Frühausfälle, die sich vor der nächsten geplanten Wartung ergeben erkannt und ungeplante Sillstände vermieden.

Die aus den Indikatoren abgeleiteten Zustandsinformationen werden erfindungsgemäß mit einer Kategorisierung der Ventile in Beziehung gesetzt. Hierbei werden die zu überwachenden Ventile bestimmten Kategorien zugeordnet, um den Ventil-Kategorien verallgemeinerungswürdige Trends zuordnen zu können. Kategorien werden dabei gebildet durch einzelne oder Kombinationen der nachfolgend beispielhaft aufgeführten Gruppen: Ventiltyp, Prozessbedingungen (z.B. Druck, Durchfluss, Temperatur), Standort des Anwenders (z.B. Anlagenkennzeichen) Prozesstyp des Anwenders (z.B. Ethylenanlage). Die Kategorisierung erfolgt dabei durch den Anwender oder soweit möglich, den Hersteller des Ventils. Die Kategoriefelder werden in der externen Auswerteeinheit (on Premise oder Cloud) gespeichert, so dass Ventile danach sortiert/gesucht/ausgewertet werden können.

Die erfassten Indikatoren werden erfindungsgemäß mit in der Auswerteeinheit hinterlegten Grenzwerten verglichen, um den technischen Zustand des Ventilsystems zu bestimmen. Dabei können die Grenzwerte spezifisch für einen bestimmten Ventilsystemtyp sein oder allgemeine Gültigkeit besitzen, beispielsweise für jede Art von Ventilsystem.

Zusätzlich kann ein zeitlicher Verlauf der erfassten Indikatoren von der Auswerteeinheit verfolgt werden, um Veränderungen des technischen Zustands des Ventilsystems zu erkennen. Dabei kann die Auswerteeinheit einen sogenannten Trend ermitteln und hieraus in Zusammenschau mit den hinterlegten Grenzwerten Vorhersagen über einen zukünftigen technischen Zustand des Ventilsystems treffen. Bei den zur Erfassung ausgebildeten und vorgesehenen technischen Mitteln kann es sich vorzugsweise um Sensoren handeln. Bei den Indikatoren kann es sich um einen Körperschallwert und/oder einen Luftschallwert und/oder einen Druckwert innerhalb des Ventilsystems handeln. Dabei sind die Sensoren vorteilhafterweise zur Erfassung des Körperschallwerts und/oder des Luftschallwerts und/oder des Druckwerts ausgebildet und vorgesehen.

Besonders bevorzugt umfasst das Ventilsystem zusätzlich zu dem Ventil ein Vorsteuerventil und einen Antrieb. Das Vorsteuerventil kann beispielsweise ein Magnetventil oder ein hydraulisch betriebenes Ventil sein und ist zur Steuerung des Antriebs ausgebildet und vorgesehen. Der Antrieb ist zu einer Betätigung des Ventils ausgebildet und vorgesehen und kann beispielsweise ein pneumatischer oder ein elektrischer Antrieb sein.

Bei einer bevorzugten Weiterbildung des Verfahrens weisen die Sensoren eine autarke Energiequelle zur Bereitstellung einer für die Erfassung der Indikatoren benötigten Versorgungsenergie auf. Dadurch lässt sich das Verfahren ohne Rücksicht auf eine externe (zusätzlich benötigte oder bereits vorhandene) Energiequelle durchführen.

Alternativ oder zusätzlich können die Sensoren eine elektrische Verbindung zu einem das Ventilsystem versorgenden elektrischen Versorgungsnetz aufweisen. Beispielsweise können die Sensoren eine 24 Volt - Leitung zu dem Ventilsystem, die zur Übertragung eines Schaltsignals für das Ventilsystem genutzt wird, als Energiequelle nutzen. Vorteilhafterweise weisen die Sensoren dabei einen Pufferspeicher auf, um Spannungsausfällen oder Spannungsunterbrechungen im elektrischen Versorgungsnetz begegnen zu können.

Besonders bevorzugt wird durch einen Schaltvorgang des Ventilsystems ein Ruhezustand der Sensoren beendet, um die Erfassung der Indikatoren zu initiieren. Mit anderen Worten werden die Sensoren durch den Schaltvorgang aus einem Energiesparmodus "geweckt". Da sie nur dann genutzt werden, wenn sie auch tatsächlich gebraucht werden, können die Sensoren dadurch energieeffizienter betrieben werden.

Vorteilhafterweise wird die Übertragung der erfassten Indikatoren an die Auswerteeinheit mit einer Erkennung eines Öffnungsvorgangs und/oder Schließvorgangs des Ventils und/oder des Antriebs und/oder des Vorsteuerventils verknüpft, um einen Kommunikationsaufwand zu der Auswerteeinheit zu minimieren. Mit anderen Worten werden die erfassten Daten nur dann an die Auswerteeinheit übertragen, wenn auch tatsächlich ein Schaltvorgang (Öffnen oder Schließen) in dem Ventilsystem erfolgt.

Die Übertragung der erfassten Indikatoren an die Auswerteeinheit erfolgt bevorzugt kabellos (beispielsweise per Funk). Eine kabelgebundene Übertragung ist zwar im Rahmen des erfindungsgemäßen Verfahrens ebenfalls möglich, bedingt jedoch aufgrund der einzurichtenden Verdrahtung eines höheren Aufwands.

Bei einer vorteilhaften Weiterbildung der Erfindung sind die Sensoren zur Erkennung von Änderungen in einem das Ventilsystem versorgenden elektrischen Versorgungsnetz ausgebildet, um einen Startpunkt eines Schließvorgangs oder eines Öffnungsvorgangs des Ventilsystems zu erkennen. Dadurch können der Schließvorgang und der Öffnungsvorgang sicherer erkannt und Fehlinterpretationen vermieden werden. Beispielsweise können Nebengeräusche von einer Berücksichtigung ausgeschlossen werden, die in keinem Zusammenhang mit dem eigentlichen Öffnungsvorgang oder Schließvorgang stehen.

Der zeitliche Verlauf der erfassten Indikatoren kann zusätzlich dazu verwendet werden, die in der Auswerteeinheit hinterlegten Grenzwerte dynamisch anzupassen. Beispielsweise können mittlere Werte der Indikatoren über eine gewisse zurückliegende Zeitspanne vor einem Ausfall eines Ventilsystems betrachtet werden, um hieraus Rückschlüsse auf die Validität der Grenzwerte zu ziehen.

Bei einer vorteilhaften Weiterbildung des Verfahrens wird der von der Auswerteeinheit ermittelte technische Zustand des Ventilsystems an eine Einheit übertragen, die zu einer Initiierung von Wartungsmaßnahmen des Ventilsystems ausgebildet und vorgesehen ist. Bei der Einheit kann es sich um ein computergestütztes Planungswerkzeug, das vollautomatisiert Wartungsmaßnahmen initiiert und koordiniert.

Besonders bevorzugt werden die Indikatoren bereits während eines Fertigungsprozesses des Ventilsystems erfasst und an die Auswerteeinheit übertragen. Diese Indikatoren können dann von der Auswerteeinheit als Referenzwerte verwendet werden. Mithilfe dieser Referenzwerte kann beispielsweise bei einem Einbau des Ventilsystems in eine technische Anlage automatisiert überprüft werden, ob der Einbau korrekt erfolgt ist. Zudem können die Referenzindikatoren mit zeitlich nachfolgend ermittelten Indikatoren verglichen werden, um einen technischen Zustand des Ventilsystems exakter bestimmen und frühzeitiger Maßnahmen ergreifen zu können.

Die Indikatoren können aus einer für das Ventil und/oder den Antrieb charakteristische Abfolge von Körperschall-, Luftschall- oder Druckverläufen oder einer Kombination derselben abgeleitet werden.

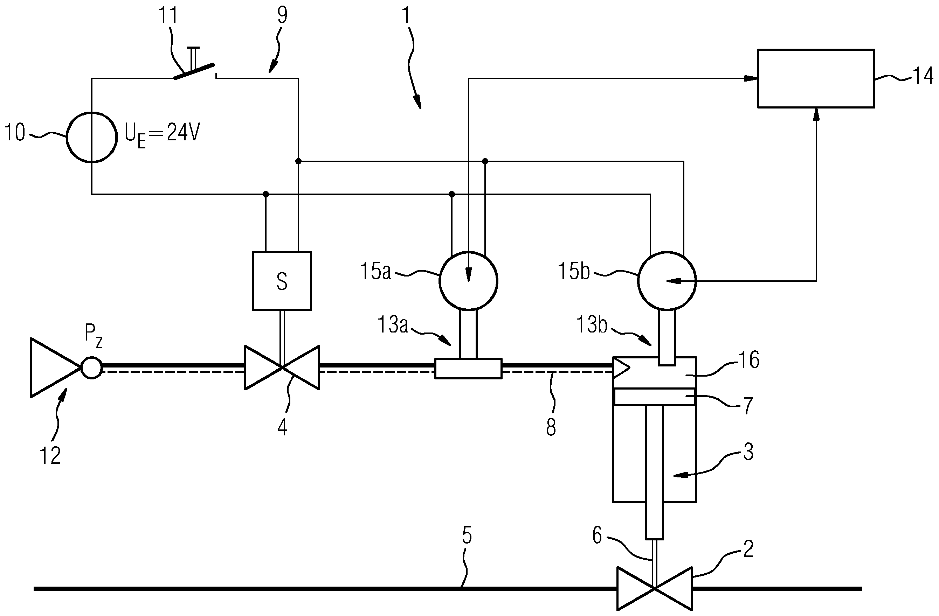

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

Die Zeichnung zeigt ein Ventilsystem 1. Das Ventilsystem 1 umfasst ein Prozessventil 2, einen pneumatischen Antrieb 3 und ein Vorsteuerventil 4.

Ein durch eine Prozessleitung 5 strömendes Medium wird durch das Prozessventil 2 gesteuert. Bei dem Prozessventil 2 handelt es sich um ein Auf-Zu Ventil (On-Off-Ventil), das zwischen den zwei Zuständen "Ventil offen" und "Ventil geschlossen" geschaltet werden kann.

Die Schaltung des Prozessventils 2 erfolgt mittels des pneumatischen Antriebs 3. In bekannter Weise wird in dem pneumatischen Antrieb 3 eine mit einer Ventilspindel 6 des Prozessventils 2 gekoppelte Membran 7 mittels durch eine Druckluftleitung 8 zugeführter Druckluft bewegt. In der Zeichnung ist der pneumatische Antrieb 3 stellvertretend für die gängigen, bekannten Ausführungsformen ohne rückstellende Federn dargestellt. Das Prozessventil 2 kann alle bekannten Konfigurationen aufweisen, wie beispielsweise "normally open" oder "normally closed", "einfachwirkend" oder doppelwirkend" etc.

Das Vorsteuerventil 4 wird mittels eines elektrischen Versorgungsnetzes 9 mit elektrischer Energie versorgt. Das elektrische Versorgungsnetz besteht in einer vereinfachten Darstellung aus einer Spannungsquelle 10, die eine Gleichspannung in Höhe von 24 V bereitstellt, und einem Taster 11, um einen Spannungskreis zu schließen und das Vorsteuerventil 4 anzusteuern. Der Taster 11 ist dabei als stellvertretend für alle gängigen Ansteuer-/Regelungsmöglichkeiten anzusehen, die beispielsweise im Kontext eines Prozessleitsystems einer technischen Anlage zur Verfügung stehen.

Das Vorsteuerventil 4 steuert (oder regelt) den Durchfluss von Druckluft, die aus einer Druckluftquelle 12 über die Druckluftleitung 8 in den pneumatischen Antrieb 3 strömt.

Das Ventilsystem 2 weist einen ersten Schall/Druckerfassungssensor 13a und einen zweiten Schall/Druckerfassungssensor 13b auf. Der erste Schall/Druckerfassungssensor 13a weist einen ersten Datenlogger 15a, der zweite Druckerfassungssensor 13b einen zweiten Datenlogger 15b auf. Der erste Schall/Druckerfassungssensor 13a ist in der Druckluftleitung 8 angeordnet bzw. er ist ein Bestandteil der Druckluftleitung 8, so dass die Druckluft vor dem Einströmen in den pneumatischen Antrieb 3 durch den ersten Druckerfassungssensor 13a strömt, welcher einen Druckwert in der Druckluftleitung 8 ermittelt und an den ersten Datenlogger 15a weiterleitet. Die Schall/ Druck-Erfassungssensoren sind beispielhaft zu verstehen. Sie können wahlweise alternativ oder auch gemeinsam verwendet werden. Ferner ist es auch möglich Sensoren einzusetzen, die nur den Schall oder nur den Druck erfassen. Der zu wählende Sensor ist dabei abhängig von der für das zu überwachende System benötigten Indikatoren mit geeigneter Indikationstiefe.

Der Schall/Druckerfassungssensor 13a kann hier auf einfache Art und Weise nachträglich in ein bestehendes Ventilsystem 1 integriert werden, ohne in das Innere des pneumatischen Antriebs 3 eingreifen zu müssen.

Der zweite Schall/Druckerfassungssensor 13b ist in einer Druckkammer 16 des pneumatischen Antriebs 3 angeordnet. Der dazugehörige zweite Datenlogger 15b ist außerhalb des pneumatischen Antriebs 3 angeordnet. Der Vorteil dieses Druckerfassungssensors 13b ist, dass die Messung des Druckwertes direkt in dem pneumatischen Antrieb 3 erfolgen kann.

Bei Verwendung eines reinen Schallsensors 13a, 13b ergibt sich eine nochmalige Vereinfachung, da eine Körper- oder Luftschallmessung als ClampOn System, also ohne Öffnen der Pneumatik bzw. Hydraulik, ausgeführt sein kann.

Die Datenlogger 15a, 15b sind jeweils in einer Parallelschaltung zu dem Vorsteuerventil 4 an das elektrische Versorgungsnetz 9 angeschlossen. Damit kann die Versorgung der Datenlogger 15a, 15b bzw. der damit verbundenen Druckerfassungssensoren 13a, 13b gewährleistet werden.

Die Schall/Druckerfassungssensoren 13a, 13b sind dazu ausgebildet, einen Druckverlauf des pneumatischen Antriebs 3 bei einem Schließvorgang oder einem Öffnungsvorgang des Prozessventils 2 als Indikator zur technischen Charakterisierung des Antriebs 3 bzw. des Ventils 2 zu erfassen.

Der Ausdruck "Druckverlauf des pneumatischen Antriebs 3" kann dabei bedeuten, dass der Druck direkt in einer Druckkammer 16 des Antriebs 3 gemessen wird. Es liegt aber gleichfalls in der Bedeutung des Ausdrucks, dass der Druck in der Druckluftleitung 8 gemessen wird. Mit anderen Worten bedeutet dies, dass ein Druckwert bereits vor dem Einströmen der Luft in die Druckkammer 16 des pneumatischen Antriebs 3 erfasst wird. Bei einer reinen Schallmessung kann demgegenüber ausgenutzt werden, dass aufgrund der Schallausbreitung im gesamten System alle charakteristischen Indikatoren an einer Stelle erfassbar sind.

Die von den Schall/Druckerfassungssensoren 13a, 13b erfassten Daten bzw. Indikatoren werden an eine außerhalb des Ventilsystems 1 angeordnete Auswerteeinheit 14 übertragen. Die Auswerteeinheit 14 ist im vorliegenden Ausführungsbeispiel außerhalb des Ventilsystems 1, aber innerhalb einer (nicht gezeigten) technischen Anlage angeordnet (on premise private Cloud). Wahlweise kann die Auswerteeinheit auch außerhalb der Anlage angeordnet sein (internetbasierte Cloud). Die Auswerteeinheit 14 bestimmt unter anderem anhand der an sie übertragenen Indikatoren einen technischen Zustand des Ventilsystems 1 .

In einem Ausführungsbeispiel kann die Auswerteeinheit 14 nicht nur Daten von den Schall/Druckerfassungssensoren 13a, 13b empfangen, sondern auch Daten, Steuerbefehle etc. an diese übertragen. Mit anderen Worten kann eine bidirektionale Verbindung zwischen der Auswerteeinheit 14 und den Schall/Druckerfassungssensoren 13a, 13b eingerichtet sein. Die Verbindung kann generell kabellos oder kabelgebunden sein. Bevorzugt ist jedoch eine kabellose Verbindung, da kein Verdrahtungsaufwand anfällt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Überwachung einer Mehrzahl von Systemen (1) mit mechanisch beweglichen Teilen, vorzugsweise Ventilsystemen (1), welche Systeme (1) bevorzugt Teil einer technischen Anlage, insbesondere Produktionsanlage, sind, wobei die Systeme (1) jeweils wenigstens ein mechanisch bewegliches Teil (2), insbesondere ein Ventil (2), aufweisen, umfassend:
a) Erfassen von Indikatoren, die zu einer technischen Charakterisierung eines Bewegungsvorgangs des jeweiligen mechanisch beweglichen Teils (2) verwendbar sind, mittels zur Erfassung der Indikatoren ausgebildeter und vorgesehener technischer Mittel (13a, 13b);
b) Übertragen der erfassten Indikatoren und eines jeweiligen Wartungszustandes des jeweiligen mechanisch beweglichen Teils (2) an eine außerhalb der Systeme (1) angeordnete Auswerteeinheit (14),
c) Kategorisierung der der Auswerteeinheit (14) zugeordneten Systeme (1) durch die Auswerteeinheit (14);
d) Vergleichen der erfassten und in der Auswerteeinheit (14) hinterlegten Indikatoren mit den erfassten Wartungszuständen durch die Auswerteeinheit (14), um aus einer Änderung des Wartungszustands zugehörige Grenzwerte für die Indikatoren oder eine Kombination von Indikatoren für die jeweilige Kategorie des jeweiligen Systems (1) zu bestimmen und in der Auswerteeinheit (14) zu hinterlegen,
e) Vergleichen der erfassten Indikatoren mit den in der Auswerteeinheit (14) hinterlegten Grenzwerten, um einen technischen Zustand des jeweiligen Systems (1) zu bestimmen,
f) Kontinuierliches Anpassen der Grenzwerte für die Indikatoren oder eine Kombination von Indikatoren für jede Kategorie des jeweiligen Systems (1) durch die Auswerteeinheit (14), um eine Trennschärfe der berechneten Grenzwerte automatisch zu verbessern.

2. Verfahren nach Anspruch 1, wobei die Mehrzahl von Systemen (1) Ventilsysteme (1) sind, wobei die Ventilsysteme (1) jeweils zusätzlich zu einem Ventil (2) ein Vorsteuerventil (4) und einen Antrieb (3) umfassen, wobei zusätzlich Indikatoren mittels zur Erfassung ausgebildeter und vorgesehener technischer Mittel (13a, 13b) erfasst werden, die zu einer technischen Charakterisierung eines Öffnungsvorgangs und/oder Schließvorgangs des jeweiligen Vorsteuerventils (4) und des jeweiligen Antriebs (3) verwendbar sind, und wobei die zusätzlich erfassten Indikatoren ebenfalls an die Auswerteeinheit (14) übertragen werden, um einen Zustand des jeweiligen Ventilsystems (1) zu bestimmen.

3. Verfahren nach Anspruch 2, bei dem es sich bei den erfassten Indikatoren um einen Körperschallwert und/oder einen Luftschallwert und/oder einen Druckwert innerhalb des jeweiligen Ventilsystems (1) handelt, wobei die zur Erfassung des Körperschallwerts und/oder des Luftschallwerts und/oder des Druckwerts ausgebildeten und vorgesehen technischen Mittel Sensoren (13a, 13b) sind.

4. Verfahren nach Anspruch 3, bei dem die Sensoren (13a, 13b) eine autarke Energiequelle zur Bereitstellung einer für die Erfassung der Indikatoren benötigten Versorgungsenergie aufweisen und/oder bei dem die Sensoren (13a, 13b) eine elektrische Verbindung zu einem das jeweilige Ventilsystem (1) versorgenden elektrischen Versorgungsnetz (9) aufweisen.

5. Verfahren nach einem der Ansprüche 2 bis 4, bei dem durch einen Schaltvorgang des jeweiligen Ventilsystems (1) ein Ruhezustand der Sensoren (13a, 13b) beendet wird, um die Erfassung der Indikatoren zu initiieren.

6. Verfahren nach einem der Ansprüche 2 bis 5, bei dem die Sensoren (13a, 13b) zur Erkennung von Änderungen in einem das jeweilige Ventilsystem (1) versorgenden elektrischen Versorgungsnetz (9) ausgebildet sind, um einen Startpunkt eines Schließvorgangs oder eines Öffnungsvorgangs des jeweiligen Ventilsystems (1) zu erkennen.

7. Verfahren nach einem der vorangegangenen Ansprüche 2-6, bei dem das jeweilige Ventilsystem (1) Teil einer technischen Anlage ist und die Auswerteeinheit (14) in einer externen Cloudumgebung außerhalb der technischen Anlage, oder innerhalb der technischen Anlage angeordnet ist.

8. Verfahren nach einem der vorangegangenen Ansprüche 2-7 bei dem die Übertragung der erfassten Indikatoren an die Auswerteeinheit (14) mit einer Erkennung eines Öffnungsvorgangs und/oder Schließvorgangs des jeweiligen Ventils (2) und/oder des jeweiligen Antriebs (3) und/oder des jeweiligen Vorsteuerventils (4) verknüpft wird, um einen Kommunikationsaufwand zu der Auswerteeinheit (14) zu minimieren.

9. Verfahren nach einem der vorangegangenen Ansprüche, bei dem die Übertragung der erfassten Indikatoren zu der Auswerteeinheit (14) kabellos erfolgt.

10. Verfahren nach einem der vorangegangenen Ansprüche 2-9, bei dem der von der Auswerteeinheit (14) ermittelte technische Zustand des jeweiligen Ventilsystems (1) an eine Einheit übertragen wird, die zu einer Initiierung von Wartungsmaßnahmen des jeweiligen Ventilsystems ausgebildet und vorgesehen ist.

11. Verfahren nach einem der vorangegangenen Ansprüche 2-10, bei dem während eines Fertigungsprozesses des jeweiligen Ventilsystems (1) die Indikatoren erfasst und an die Auswerteeinheit (14) übertragen werden, um als Referenz für nachfolgende Erfassungen der Indikatoren zu fungieren.

12. Verfahren nach einem der vorangegangenen Ansprüche 2-11, bei dem die Indikatoren aus einer charakteristischen Abfolge von Körperschall- oder Luftschall- oder Druckverläufen des : jeweiligen mechanisch beweglichen Teils (2) und/oder des jeweiligen Antriebs (3) und/oder des jeweiligen Vorsteuerventils (4) abgeleitet werden.

## Claims

1. Method for monitoring a plurality of systems (1) with mechanically movable parts, preferably valve systems (1), which systems (1) are preferably part of a technical plant, in particular production plant, wherein the systems (1) each have at least one mechanically movable part (2), in particular a valve (2), comprising:
a) acquisition of indicators, which are able to be used for a technical characterisation of a movement procedure of the respective mechanically movable part (2), by means of technical means (13a, 13b) embodied and intended for the acquisition of the indicators;
b) transfer of the acquired indicators and a respective maintenance status of the respective mechanically movable part (2) to an evaluation unit (14) arranged outside the systems (1)
c) categorisation, by the evaluation unit (14) of the systems (1) allocated to the evaluation unit (14),
d) comparison, by the evaluation unit (14), of the indicators which have been acquired and recorded in the evaluation unit (14) with the acquired maintenance statuses, in order to determine, from a change in the maintenance status, the associated limit values for the indicators or a combination of indicators for the respective category of the respective system (1), and to record these in the evaluation unit (14),
e) comparison of the acquired indicators with the limit values recorded in the evaluation unit (14), in order to determine a technical status of the respective system (1),
f) continuous adaptation of the limit values for the indicators or a combination of indicators for each category of the respective system (1) by the evaluation unit (14), in order to automatically improve a selectivity of the calculated limit values.

2. Method according to claim 1, wherein the plurality of systems (1) are valve systems (1), wherein, in addition to a valve (2), the valve systems (1) each comprise a pilot valve (4) and a drive (3), wherein additionally indicators are acquired by means of technical means (13a, 13b) embodied and intended for acquisition, which are able to be used for a technical characterisation of an opening procedure and/or closing procedure of the respective pilot valve (4) and the respective drive (3), and wherein the additionally acquired indicators are likewise transferred to the evaluation unit (14), in order to determine a status of the respective valve system (1).

3. Method according to claim 2, in which the acquired indicators involve a structure-borne sound value and/or an airborne sound value and/or a pressure value within the respective valve system (1), wherein the technical means embodied and intended for the acquisition of the structure-borne sound and/or the airborne sound and/or the pressure value are sensors (13a, 13b).

4. Method according to claim 3, in which the sensors (13a, 13b) have an autonomous power source for providing a supply power necessary for the acquisition of the indicators and/or in which the sensors (13a, 13b) have an electrical connection to an electrical supply network (9) supplying the respective valve system (1).

5. Method according to one of claims 2 to 4, in which an idle state of the sensors (13a, 13b) is ended by a switching procedure of the respective valve system (1), in order to initiate the acquisition of the indicators.

6. Method according to one of claims 2 to 5, in which the sensors (13a, 13b) are embodied for the identification of changes in an electrical supply network (9) which supplies the respective valve system (1), in order to identify a start point of a closing procedure or an opening procedure of the respective valve system (1).

7. Method according to one of the preceding claims 2-6, in which the respective valve system (1) is part of a technical plant and the evaluation unit (14) is arranged in an external cloud environment outside the technical plant, or within the technical plant.

8. Method according to one of the preceding claims 2-7, in which the transfer of the acquired indicators to the evaluation unit (14) is linked with an identification of an opening procedure and/or closing procedure of the respective valve (2) and/or of the respective drive (3) and/or of the respective pilot valve (4), in order to minimise a communication effort for the evaluation unit (14).

9. Method according to one of the preceding claims, in which the transfer of the acquired indicators to the evaluation unit (14) takes place wirelessly.

10. Method according to one of the preceding claims 2-9, in which the technical status of the respective valve system (1) ascertained by the evaluation unit (14) is transferred to a unit, which is embodied and intended to initiate maintenance measures for the respective valve system.

11. Method according to one of the preceding claims 2-10, in which the indicators are acquired and transferred to the evaluation unit (14) during a manufacturing process of the respective valve system (1), in order to function as a reference for subsequent acquisitions of the indicators.

12. Method according to one of the preceding claims 2-11, in which the indicators are derived from a characteristic sequence of structure-borne, airborne or pressure characteristics of the respective mechanically movable part (2) and/or the respective drive (3) and/or the respective pilot valve (4).

## Revendications

1. Procédé de contrôle d'une pluralité de systèmes (1) ayant des parties mobiles mécaniquement, de préférence de systèmes (1) de soupape, lesquels systèmes (1) font partie de préférence d'une installation technique, en particulier d'une installation de production, dans lequel les systèmes (1) ont chacun au moins une partie (2) mobile mécaniquement, en particulier une soupape (2), comprenant :
a) la détection d'indicateurs, qui peuvent être utilisés pour une caractérisation technique d'une opération de déplacement de la partie (2) mobile mécaniquement respective à l'aide de moyens (13a, 13b) techniques constitués et prévus pour la détection des indicateurs ;
b) la transmission des indicateurs détectés et d'un état d'entretien respectif de la partie (2) mobile mécanique respective à une unité (14) d'analyse disposée à l'extérieur des systèmes (1),
c) la catégorisation par l'unité (14) d'analyse des systèmes (1) affectés à l'unité (14) d'analyse,
d) la comparaison des indicateurs détectés et mis en mémoire dans l'unité (14) d'analyse aux états d'entretien détectés par l'unité (14) d'analyse afin de déterminer et de mettre en mémoire dans l'unité (14) d'analyse des valeurs limites, affectées à une modification de l'état d'entretien, des indicateurs ou d'une combinaison d'indicateurs pour la catégorie respective du système respectif.
e) la comparaison des indicateurs détectés aux valeurs limites mises en mémoire dans l'unité (14) d'analyse afin de déterminer un état technique du système (1) respectif,
f) l'adaptation en continu des valeurs limites des indicateurs ou d'une combinaison d'indicateurs pour chaque catégorie du système (1) respectif par l'unité (14) d'analyse afin d'améliorer automatiquement un degré de séparation des valeurs limites calculées.

2. Procédé suivant la revendication 1, dans lequel la pluralité de systèmes (1) sont des systèmes (1) à soupape, dans lequel les systèmes à soupape comprennent chacun supplémentairement à une soupape (2), une soupape (4) pilote et un entraînement (3), dans lequel on détecte supplémentairement des indicateurs à l'aide de moyens (13a, 13b) techniques constitués et prévus pour la détection, qui peuvent être utilisés pour une caractérisation technique d'une opération d'ouverture et/ou d'une opération de fermeture de la soupape (4) pilote respective et de l'entraînement (3) respectif, et dans lequel on transmet les indicateurs détectés supplémentairement également à l'unité (14) d'analyse afin de déterminer un état du système (1) de soupape respectif.

3. Procédé suivant la revendication 2, dans lequel les indicateurs détectés sont une valeur de bruit de corps et/ou une valeur de son aérien et/ou une valeur de pression au sein du système (1) à soupape respectif, dans lequel les moyens techniques constitués et prévus pour la détection de la valeur du bruit de corps et/ou de la valeur du son aérien et/ou de la valeur de pression sont des capteurs (13a, 13b).

4. Procédé suivant la revendication 3, dans lequel les capteurs (13a, 13b) ont une source d'énergie autonome de mise à disposition d'une énergie d'alimentation nécessaire pour la détection des indicateurs, et/ou dans lequel les capteurs (13a, 13b) ont une liaison électrique à un réseau (9) d'alimentation électrique alimentant le système (1) à soupape.

5. Procédé suivant l'une des revendications 2 à 4, dans lequel par une opération de commutation du système (1) à soupape respectif, on met fin à un état de repos des capteurs (13a, 13b) afin de lancer la détection des indicateurs.

6. Procédé suivant l'une des revendications 2 à 5, dans lequel les capteurs (13a, 13b) sont constitués pour la détection de variations dans un réseau (9) d'alimentation électrique alimentant le système (1) à soupape respectif afin de détecter un point de début d'une opération de fermeture ou d'une opération d'ouverture du système (1) à soupape respectif.

7. Procédé suivant l'une des revendications 2 à 6 précédentes, dans lequel le système (1) à soupape respectif fait partie d'une installation technique et l'unité (14) d'analyse est disposé dans un environ extérieur de nuage à l'extérieur de l'installation technique ou à l'intérieur de l'installation technique.

8. Procédé suivant l'une des revendications 2 à 7 précédentes, dans lequel on combine la transmission des indicateurs détectés à l'unité (14) d'analyse à une détection d'une opération d'ouverture et/ou d'une opération de fermeture de la soupape (2) respective et/ou de l'entraînement (3) respectif et/ou de la soupape (4) pilote respective, afin de minimiser une dépense de communication avec l'unité (14) d'analyse.

9. Procédé suivant l'une des revendications précédentes, dans lequel la transmission des indicateurs détectés à l'unité (14) d'analyse s'effectue sans câble.

10. Procédé suivant l'une des revendications 2 à 9 précédentes, dans lequel on transmet l'état technique, détecté par l'unité (14) d'analyse, du système (1) à soupape respectif à une unité qui est constituée et prévue pour lancer des mesures d'entretien du système à soupape respectif.

11. Procédé suivant l'une des revendications 2 à 10 précédentes, dans lequel, pendant une opération de fabrication du système (1) à soupape respectif, on détecte les indicateurs et on les transmet à l'unité (14) d'analyse afin de servir de référence pour des détections ultérieures des indicateurs.

12. Procédé suivant l'une des revendications 2 à 11 précédentes, dans lequel on déduit les indicateurs d'une succession caractéristique de courbes de bruit de corps ou de courbe de bruit aérien ou de courbe de pression de la partie (2) mobile mécaniquement respective et/ou de l'entraînement (3) respectif et/ou de la soupape (4) pilote respective.
